# FASCICULE DE BREVET EUROPEEN

(11) **EP 1 749 237 B1**
(45) Date de publication et mention de la délivrance du brevet: **03.10.2012**
(21) Numéro de dépôt: 05773072.3
(22) Date de dépôt: 20.05.2005
(51) Int. Cl.: G03B 13/10, G06K 9/00

(54) **Dispositif de positionnement d'un utilisateur par affichage de son image en miroir, dispositif de capture d'images et procéde de positionnement correspondants**
Vorrichtung zur Positionierung eines Anwenders mittels Anzeige seines Bildes in einem Spiegel und entsprechende Bilderfassungsvorrichtung und Positionierungsverfahren
Device for positioning a user by displaying the image thereof in a mirror, and corresponding image capturing device and positioning method

(30) Priorité: 25.05.2004 FR 0405649
(43) Date de publication de la demande: 07.02.2007
(73) Titulaire: Morpho, 75015 Paris (FR)
(72) Inventeur: ROUH, Alain, F-94300 VINCENNES (FR); MONTEILLIET, Gilles, F-95450 US (FR); COTTARD, Martin, F-92420 VAUCRESSON (FR); FONDEUR, Jean-Christophe, ALEXANDRIA VA 22314 (US)
(74) Mandataire: Lavialle, Bruno François Stéphane
(86) Numéro de dépôt international: PCT/FR2005/001265
(87) Numéro de publication internationale: WO 2006/000670

(56) Documents cités:
- DE-U1- 20 101 349
- US-A- 5 664 235
- US-A1- 2002 130 961
- US-A1- 2003 012 413
- US-A1- 2003 103 030
- US-A1- 2004 037 452
- US-B1- 6 289 113

## Description

La présente invention concerne un dispositif et un procédé de positionnement d'un utilisateur par affichage simultané de son image en miroir et de repères de positionnement.

Un tel dispositif de positionnement est par exemple utilisable pour positionner le visage d'un utilisateur devant un dispositif de capture d'images utilisables à des fins d'identification par reconnaissance du visage ou des yeux de l'utilisateur.

### ARRIERE-PLAN DE L'INVENTION

Les dispositifs d'identification automatique d'un individu par l'iris de l'oeil comprennent une ou deux caméras destinées à capturer des images des iris de l'individu. Les caméras utilisées présentent une largeur et une profondeur de champ limitées qui rendent nécessaire d'avoir un positionnement précis de l'individu par rapport aux caméras afin d'avoir des images offrant une qualité suffisante pour permettre une reconnaissance des iris et une identification de l'individu, connu p.ex. du DE 20101349U1.

On a donc pensé à associer au dispositif d'identification un dispositif de positionnement de l'utilisateur du dispositif d'identification.

Il est connu p. ex du document US 2002/0130961 A1 un dispositif de positionnement qui détecte la position de l'utilisateur et envoie à ce dernier des signaux visuels lui permettant de corriger sa position si celle-ci ne convient pas. Toutefois, il arrive qu'une interprétation erronée de ces signaux conduisent à l'impossibilité d'un positionnement correct sans l'intervention d'un opérateur.

Il existe donc des dispositifs de positionnement du type précédent auxquels a été adjoint un système de synthèse vocale fournissant à l'utilisateur des indications verbales de repositionnement. Ce procédé nécessite toutefois de préalablement connaître la ou les langues parlées par l'utilisateur et est délicat à mettre en oeuvre dans les environnements bruyants. En outre, l'élaboration et la prononciation des messages vocaux est relativement longue, ce qui est incompatible avec la durée maximale d'identification, de l'ordre de trois minutes, qui est actuellement imposée lorsque le nombre de personnes à identifier est important.

Pour résoudre ces inconvénients, on a envisagé d'utiliser un miroir sur lequel figurent des repères de positionnement des yeux de l'utilisateur, l'utilisateur étant correctement positionné lorsque les yeux de son reflet sur le miroir et les repères de positionnement sont superposés. La correction du positionnement est alors très intuitive. Cependant, le reflet de l'utilisateur et les repères de positionnement ne se trouvent alors pas dans le même plan optique. Or, il existe des personnes qui possèdent un oeil préférentiel pour viser dans l'espace. Ces personnes tendent inconsciemment à utiliser uniquement cet oeil, dit directeur, pour s'aligner sur les repères. Il en résulte une erreur de parallaxe entraînant un mauvais positionnement. En outre, l'existence de deux plans optiques risque d'entraîner des problèmes d'accommodation pour l'utilisateur qui ne peut voir simultanément nets son reflet et les repères. Ces problèmes d'accommodation peuvent nuire au positionnement.

### OBJET DE L'INVENTION

Un but de l'invention est de fournir un moyen permettant un positionnement rapide et précis de l'utilisateur.

### BREF EXPOSE DE L'INVENTION

A cet effet, on prévoit, selon l'invention, un dispositif de positionnement du visage d'un utilisateur par rapport à un dispositif de capture d'images, le dispositif de positionnement comprenant un appareil de prise de vue agencé pour fournir des images inversées horizontalement, un écran d'affichage des images inversées qui est relié à l'appareil de prise de vue, et des moyens pour superposer aux images affichées par l'écran au moins un repère de positionnement de l'utilisateur, le repère de positionnement et les images affichées étant sensiblement dans un même plan.

Ainsi, l'écran joue le rôle d'un miroir dans lequel l'utilisateur peut se voir et corriger sa position en s'alignant sur le repère de positionnement. Les images de l'utilisateur et le repère de positionnement se trouvant dans le même plan, il n'y a pas de problème de parallaxe et l'utilisateur n'a pas de difficulté d'accommodation pour voir nettement et simultanément son image et le repère. Le dispositif de l'invention possède en outre un caractère intuitif qui permet à l'utilisateur de rapidement parvenir à se positionner correctement.

Selon une première caractéristique particulière, les moyens de superposition sont agencés pour superposer deux repères de positionnement de deux éléments du corps de l'utilisateur et le dispositif comprend un organe de mesure d'une distance entre l'utilisateur et l'appareil de prise de vue, un moyen pour déterminer sur une image de l'utilisateur à cette distance une distance entre les deux éléments du corps de l'utilisateur et un moyen pour adapter un écartement des repères de positionnement par rapport aux images en fonction de la distance déterminée existant entre les éléments du corps de l'utilisateur.

Dans l'hypothèse d'un positionnement des yeux de l'utilisateur, il existe un risque qu'un utilisateur ait une distance interoculaire par exemple plus faible (ou plus grand) que l'écartement des repères de positionnement. Sans correction, pour que ses yeux soient alignés avec les repères de positionnement, un tel utilisateur serait conduit à se positionner trop près (ou trop loin) de l'appareil de prise de vue qu'un utilisateur ayant une distance interoculaire standard. Le moyen d'adaptation permet de corriger les variations morphologiques existant d'un individu à l'autre afin d'aboutir à un positionnement relativement précis.

De préférence alors, les moyens d'adaptation comprennent un organe de commande d'un grossissement des images affichées sur l'écran.

Ainsi, pour reprendre l'hypothèse ci-dessus, la relative faiblesse (ou importance) de la distance interoculaire de l'utilisateur sera compensée en grossissant (ou en réduisant) l'image de l'utilisateur. Ce mode d'adaptation est particulièrement simple.

Selon une deuxième caractéristique particulière, le dispositif de positionnement comprend un moyen de détection sur les images d'un défaut d'alignement entre le repère de positionnement et l'utilisateur et un moyen pour amplifier sur l'écran le défaut d'alignement.

Les défauts détectés peuvent être des écarts latéraux, en hauteur ou en profondeur de l'utilisateur. L'amplification des défauts de positionnement permet à l'utilisateur de corriger plus facilement sa position.

L'invention a également pour objet un dispositif de capture d'au moins une image d'au moins un oeil d'un utilisateur, comprenant au moins une caméra d'acquisition de l'image, le dispositif de capture comprenant un dispositif de positionnement présentant l'une quelconque des caractéristiques précédentes, l'écran du dispositif de positionnement étant monté dans le dispositif de capture de telle manière que lorsque l'utilisateur regarde l'écran ledit oeil de l'utilisateur est sensiblement dans l'axe de la caméra d'acquisition.

Le regard de l'utilisateur lors du positionnement est correctement orienté pour la capture d'image de sorte que l'opération de capture d'image peut immédiatement suivre l'opération de positionnement sans même nécessiter une réorientation du regard de l'utilisateur.

L'invention a en outre pour objet un procédé de positionnement d'un utilisateur par rapport à un dispositif de capture d'images, comprenant les étapes de filmer des images de l'utilisateur de façon sensiblement continue, d'inverser horizontalement les images filmées et présenter à l'utilisateur les images inversées en leur superposant au moins un repère de positionnement, le repère de positionnement et les images étant présentées sensiblement dans un même plan.

D'autres caractéristiques et avantages de l'invention ressortiront à la lecture de la description qui suit de deux modes de réalisation particuliers non limitatifs de l'invention.

### BREVE DESCRIPTION DES FIGURES

Il sera fait référence aux dessins annexés, parmi lesquels :
- la figure 1 est une vue schématique de face d'un dispositif de capture d'images selon un premier mode de réalisation de l'invention,
- la figure 2 est une vue schématique de côté d'un dispositif de capture d'images selon un deuxième mode de réalisation de l'invention,
- la figure 3 est une vue analogue à la figure 2 d'une variante du deuxième mode de réalisation.

### EXPOSE DETAILLE

L'invention est ici décrite en application à un dispositif de capture d'images des yeux d'un utilisateur en vue d'identifier celui-ci.

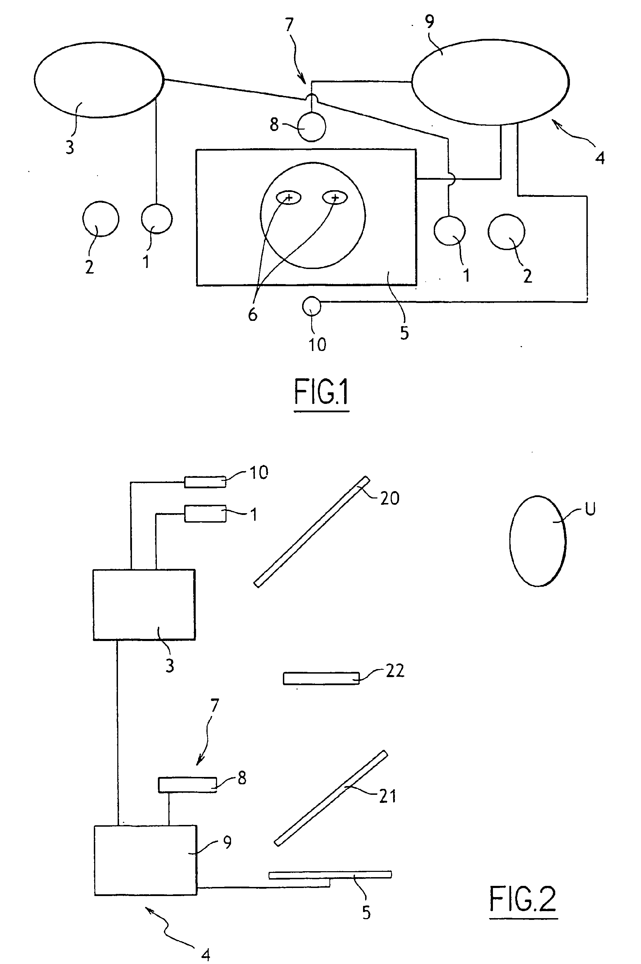

En référence à la figure 1 et conformément au premier mode de réalisation dit à vision directe, le dispositif de capture d'images comprend de façon connue en elle-même deux caméras 1 d'acquisition dans l'infrarouge des images des yeux de l'utilisateur et deux sources 2 d'éclairage infrarouge. Les caméras 1 sont disposées selon une ligne horizontale en des positions écartées l'une de l'autre pour capturer chacune des images d'un des yeux de l'utilisateur lorsque celui-ci se trouve en une position de référence par rapport aux caméras. Cette position de référence est celle qui permet d'avoir des images de qualité suffisante des deux yeux de l'utilisateur. Les caméras 1 sont reliées à une unité informatique de traitement 3, connue en elle-même, qui traite les images et effectue une identification de l'utilisateur par la reconnaissance de ses iris.

Le dispositif de capture d'images comprend un dispositif de positionnement généralement désigné en 4.

Le dispositif de positionnement 4 comprend un écran 5 disposé entre les deux caméras 1. Deux repères de positionnement 6 sont marqués sur la surface de l'écran 5 en des positions écartées horizontalement d'une distance correspondant à une distance interoculaire standard d'un utilisateur se trouvant à la position de référence en fonction d'un grossissement nominal de l'image.

Le dispositif de positionnement 4 comprend également un appareil de prise de vue généralement désigné en 7 comportant une caméra 8, fonctionnant dans le visible, reliée à une unité de commande 9 effectuant une inversion horizontale des images fournies par la caméra 8. La caméra 8 comprend un zoom motorisé. L'unité de commande 9 est agencée pour commander le zoom motorisé et est reliée à l'écran 5.

Le dispositif de capture comprend un télémètre 10 qui est relié à l'unité de commande 9 et qui fonctionne dans l'infrarouge.

Lorsque l'utilisateur se présente devant le dispositif de capture d'images, la caméra 8 filme en continu des images du visage de l'utilisateur. Ces images sont inversées horizontalement par l'unité de commande 9 qui transmet ces images inversées à l'écran 5.

Pour l'utilisateur, l'écran 5 apparaît ainsi comme un miroir sur lequel sont marqués des repères de positionnement 6 avec lesquels il doit aligner l'image de ses yeux. Les images affichées par l'écran 5 et les repères de positionnement 6 sont situés dans un même plan de sorte que les images comme les repères sont perçus nets et sans parallaxe. En outre, l'utilisation d'une seule caméra 8 élimine les problèmes d'oeil directeur ou dominant qui se posent dans la vision binoculaire.

Le télémètre 10 mesure en continu la distance le séparant de l'utilisateur. A un instant prédéterminé, la distance mesurée et une image de l'utilisateur à cette distance sont utilisées par l'unité de commande 9 pour déterminer la distance interoculaire de l'utilisateur. Si la distance interoculaire de l'utilisateur est différente de la distance interoculaire standard, le zoom est commandé pour adapter le grossissement de l'image au rapport entre la distance interoculaire de l'utilisateur et la distance interoculaire standard.

L'utilisateur corrige sa position pour aligner sur l'écran 5 ses yeux avec les repères de positionnement 6.

Lorsque les repères de positionnement 6 et l'image des yeux de l'utilisateur sont superposés, les caméras 1 capturent des images des yeux de l'utilisateur. On notera que lorsque l'utilisateur regarde l'écran 5, ses yeux sont sensiblement dans l'axe des caméras 1. Il est ensuite procéder à une reconnaissance classique des iris de l'utilisateur pour réaliser son identification.

Les éléments identiques ou analogues à ceux précédemment décrits porteront des références numériques identiques dans la description qui suit du deuxième mode de réalisation.

En référence à la figure 2 et selon le deuxième mode de réalisation dit à repliement, la caméra 8 de l'appareil de prise de vue 7 et l'écran 5 du dispositif de positionnement 4 ne sont plus disposés au voisinage immédiat des caméras 1 comme dans le premier mode de réalisation.

Dans le deuxième mode de réalisation, le dispositif de positionnement comprend en outre deux lames séparatrices 20, 21 parallèles. La lame séparatrice 20 s'étend en biais devant les caméras 1 et le télémètre 10 qui sont adjacents. La lame séparatrice 20 est un séparateur spectral agencé de façon connue pour transmettre le rayonnement infrarouge et réfléchir le rayonnement visible. La lame séparatrice 20 est ici à 45° par rapport à l'axe optique des caméras 1. La lame séparatrice 21 est un séparateur de flux qui transmet une portion du flux lumineux visible provenant de la lame séparatrice 20 vers l'écran 5 et qui réfléchit une proportion correspondante du flux lumineux visible vers la caméra 8.

Un organe dé-accommodant 22 est disposé entre les lames séparatrices 20 et 21. L'organe dé-accomodant 22 est ici une lentille agencée de façon connue en elle-même pour réaliser une focalisation ou mise au point à l'infini. Les lames séparatrices 20, 21, l'organe dé-accommodant 22 et l'écran 5 sont alignés sensiblement sur un même axe.

Le fonctionnement du dispositif de positionnement selon le deuxième mode de réalisation est identique à celui du premier mode de réalisation.

L'image visible de l'utilisateur U se reflète successivement dans les lames séparatrices 20 et 21 pour être capturée par la caméra 8.

L'écran 5 est visible au travers de la lame séparatrice 21 et de l'organe dé-accommodant 22 et se reflète dans la lame séparatrice 20 en direction de l'utilisateur U. Grâce à l'organe dé-accommodant 22, l'utilisateur U n'a pas besoin d'accommoder sa vision pour voir l'écran 5 nettement.

Les caméras 1 et le télémètre 10 agissent directement au travers de la lame séparatrice 20.

Le dispositif du deuxième mode de réalisation présente l'avantage que la largeur de l'écran 5 n'est pas conditionnée par l'espacement des caméras 1 comme dans le premier mode de réalisation.

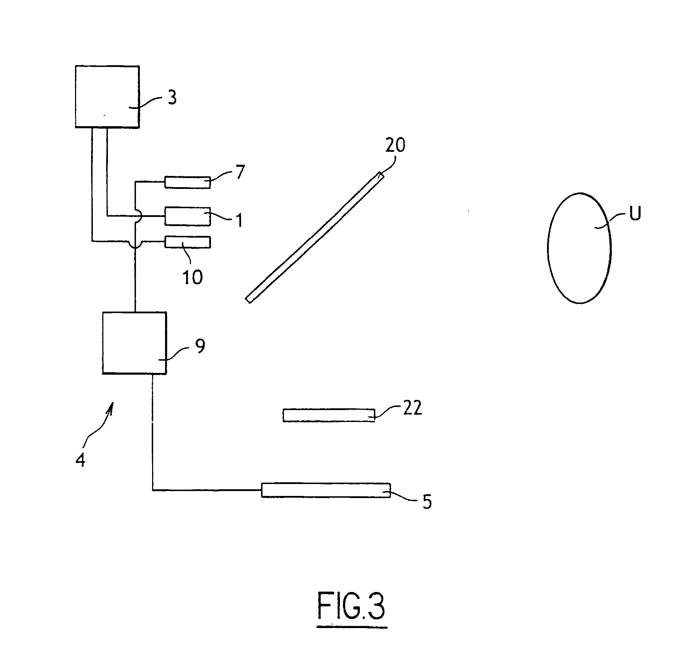

En variante de ce deuxième mode de réalisation, conformément à la figure 3, la lame séparatrice 21 a été supprimée et la caméra 8 a été disposée au voisinage des caméras 1 derrière la lame séparatrice 20. La lame séparatrice 20 transmettant le rayonnement infrarouge, la caméra 8 utilisée doit être sensible à ce rayonnement.

L'écran 5 est disposé directement derrière l'organe dé-accommodant 22.

Il est également possible d'utiliser des caméras 1 et 8 fonctionnant dans le visible en utilisant une lame séparatrice transmettant une proportion du visible.

L'unité de commande 9 incorpore ici en outre un organe de détection d'un défaut d'alignement entre les repères de positionnement et les yeux de l'utilisateur et un moyen d'amplification de ce défaut agencé pour grossir l'image et les repères de positionnement afin d'amplifier le défaut de positionnement à mesure que l'utilisateur se rapproche de la position de référence et faciliter ainsi son positionnement.

Le moyen d'amplification est également agencé pour amplifier un défaut d'alignement latéral et/ou en hauteur en déplaçant de façon correspondante les images affichées sur l'écran par rapport aux repères de positionnement. Un défaut de positionnement en profondeur, détecté par le télémètre, peut également être amplifié par exemple en grossissant les images lorsque l'utilisateur est trop près ou en réduisant les images lorsque l'utilisateur est trop loin.

Les moyens de détection et d'amplification sont ici des programmes informatiques de traitement d'images.

Bien entendu, l'invention n'est pas limité aux modes de réalisation décrit mais englobe également toutes les variantes entrant dans le cadre de l'invention tel que défini par les revendications.

Le dispositif de positionnement de l'invention est utilisable pour d'autres applications que la capture d'images des yeux à des fins d'identification, et par exemple à la capture d'images de visages pour une reconnaissance biométrique de celui-ci ou plus simplement pour une cabine automatique de photographie.

L'unité de traitement 8 peut être remplacée par des moyens optiques d'inversion horizontale des images tels qu'une lentille ou un miroir.

Bien que les repères de positionnement aient la forme de croix sur la figure 1, il va de soit que d'autres formes sont possibles, comme des cercles. Les repères de positionnement peuvent en outre être superposés aux images par un procédé de traitement d'images, tel que l'incrustation ou similaire, au lieu d'être marqués sur l'écran. L'écartement des repères pourrait ainsi être adapté en fonction de la distance interoculaire de l'utilisateur.

L'adaptation de l'écartement des repères de positionnement par rapport aux images affichées est facultatif et peut être omis par exemple lorsqu'une variation de la distance interoculaire n'a pas d'influence gênante sur le positionnement.

Les moyens de détection du défaut d'alignement et les moyens d'amplification sont utilisables dans tous les modes de réalisation et variantes. Ces moyens peuvent également être omis.

Bien que les séparateurs optiques aient été décrits sous la forme de lames séparatrices, les séparateurs optiques peuvent être formés par tout autre moyen et notamment des prismes.

Dans la variante du deuxième mode de réalisation, les positions de l'écran 5 et de la caméra 8 peuvent être échangées.

Bien que dans le deuxième mode de réalisation un organe dé-accommodant soit disposé en avant de l'écran et de l'appareil de prise de vue, le dispositif de positionnement peut être dépourvu d'un tel organe.

L'organe dé-accommodant 22 peut être disposé ailleurs qu'entre les deux lames semi-réfléchissantes 20, 21 et notamment entre l'écran 5 et la lame semi-réfléchissante 21. L'organe dé-accommodant 22 est facultatif et peut être omis en particulier lorsque le chemin optique entre l'utilisateur et l'écran a une longueur supérieure à 35 cm, longueur au-delà de laquelle on considère que la plupart des individus n'ont pas de problèmes d'accommodation.

Le télémètre est également facultatif.

## Revendications

1. Dispositif de positionnement (4) du visage d'un utilisateur par rapport à un dispositif de capture d'images (1), **caractérisé en ce que** le dispositif de positionnement comprend un appareil de prise de vue (7) agencé pour fournir des images inversées horizontalement, un écran (5) d'affichage des images inversées qui est relié à l'appareil de prise de vue, et des moyens pour superposer aux images affichées par l'écran au moins un repère de positionnement (6) de l'utilisateur, le repère de positionnement et les images affichées étant sensiblement dans un même plan.

2. Dispositif selon la revendication 1, **caractérisé en ce que** les moyens de superposition sont agencés pour superposer deux repères de positionnement (6) de deux éléments du corps de l'utilisateur et **en ce que** le dispositif comprend un organe de mesure (10) d'une distance entre l'utilisateur et l'appareil de prise de vue (7), un moyen (9) pour déterminer sur une image de l'utilisateur à cette distance une distance entre les deux éléments du corps de l'utilisateur et un moyen pour adapter un écartement des repères de positionnement par rapport aux images en fonction de la distance déterminée existant entre les éléments du corps de l'utilisateur.

3. Dispositif selon la revendication 2, **caractérisé en ce que** les moyens d'adaptation comprennent un organe de commande (9) d'un grossissement des images affichées sur l'écran.

4. Dispositif selon la revendication 1, **caractérisé en ce qu'**il comprend un moyen de détection sur les images d'un défaut d'alignement entre le repère de positionnement (6) et l'utilisateur et un moyen d'amplification (9) à l'écran (5) du défaut d'alignement.

5. Dispositif selon la revendication 1, **caractérisé en ce qu'**il comprend un dispositif optique dé-accommodant (22) disposé en avant de l'écran (5).

6. Dispositif de capture d'au moins une image d'au moins un oeil d'un utilisateur, comprenant au moins une caméra d'acquisition (1) de l'image, **caractérisé en ce que** le dispositif de capture comprend un dispositif de positionnement (4) conforme à l'une quelconque des revendications précédentes, l'écran (5) du dispositif de positionnement étant monté dans le dispositif de capture de telle manière que lorsque l'utilisateur regarde l'écran ledit oeil de l'utilisateur est sensiblement dans l'axe de la caméra d'acquisition.

7. Dispositif selon la revendication 6, **caractérisé en ce que** l'écran (5) est monté à proximité immédiate de la caméra d'acquisition (1).

8. Dispositif selon la revendication 6, **caractérisé en ce qu'**il comprend au moins un séparateur optique (20, 21) disposé entre l'écran (5) et la caméra d'acquisition (1).

9. Dispositif selon la revendication 8, **caractérisé en ce qu'**il comprend une première lame séparatrice (20) s'étendant en biais devant la caméra d'acquisition (1) et ayant un côté non réfléchissant orienté vers la caméra d'acquisition et un côté réfléchissant en regard d'un côté réfléchissant d'une deuxième lame séparatrice (21) s'étendant parallèlement à la première lame séparatrice et ayant un côté non réfléchissant en regard de l'écran (5), l'appareil de prise de vue (7) étant orienté vers le côté réfléchissant de la deuxième lame séparatrice.

10. Procédé de positionnement d'un utilisateur par rapport à un dispositif de capture d'images, **caractérisé en ce qu'**il comprend les étapes de filmer des images de l'utilisateur de façon sensiblement continue, d'inverser horizontalement les images filmées et présenter à l'utilisateur les images inversées en leur superposant au moins un repère de positionnement (6), le repère de positionnement et les images étant présentées sensiblement dans un même plan.

## Claims

1. A device (4) for positioning the face of a user relative to an image-capture apparatus (1), the device being **characterized in that** it comprises a picture-taking device (7) arranged to supply horizontally-reversed images, a display screen (5) for displaying the reversed images and connected to the picture-taking device, and means for superposing on the images displayed on the screen at least one positioning reference mark (6) for the user, the positioning reference mark and the displayed images lying substantially in the same plane.

2. A device according to claim 1, **characterized in that** the superposition means are arranged to superpose two positioning reference marks (6) on two items of the user's body, and **in that** the device includes a member (10) for measuring a distance between the user and the picture-taking device (7), means (9) for determining on the image of the user at said distance a distance between the two elements of the user's body, and adaptation means for adapting the spacing of the positioning reference marks relative to the images as a function of the determined distance that exists between the elements of the user's body.

3. A device according to claim 2, **characterized in that** the adaptation means comprise a control member (9) for controlling magnification of the images displayed on the screen.

4. A device according to claim 1, **characterized in that** it includes detector means for detecting any misalignment in the images between the positioning reference mark (6) and the user, and amplification means (9) for amplifying the misalignment on the screen (5).

5. A device according to claim 1, **characterized in that** it includes an optical accommodation-canceling device (22) disposed in front of the screen (5).

6. Apparatus for capturing at least one image of a user's eye, the apparatus including at least one image acquisition camera (1) and being **characterized in that** the capture apparatus comprises a positioning device (4) according to any preceding claim, the screen (5) of the positioning device being mounted in the capture device in such a manner that when the user looks at the screen, said eye of the user lies substantially on the axis of the acquisition camera.

7. Apparatus according to claim 6, **characterized in that** the screen (5) is mounted in the immediate proximity of the acquisition camera (1).

8. Apparatus according to claim 6, **characterized in that** it includes at least one beam-splitter (20, 21) disposed between the screen (5) and the acquisition camera (1).

9. Apparatus according to claim 8, **characterized in that** it includes a first plate beam-splitter (20) extending at a slope in front of the acquisition camera (1) and having a non-reflecting side pointing towards the acquisition camera and a reflecting side looking at a reflecting side of a second plate beam-splitter (21) extending parallel to the first beam-splitter and having a non-reflecting side facing the screen (5), the picture-taking device (7) facing towards the reflecting side of the second beam-splitter.

10. A method of positioning a user relative to an image capture apparatus, the method being **characterized in that** it comprises the steps of filming images of the user substantially continuously, of horizontally reversing the filmed images, and of presenting the reversed images to the user together with at least one positioning reference mark (6) superposed thereon, the positioning reference mark and the images being presented substantially in the same plane.

## Patentansprüche

1. Vorrichtung zur Positionierung (4) des Gesichtes eines Anwenders relativ zu einer Vorrichtung zur Bilderfassung (1), **dadurch gekennzeichnet, dass** die Vorrichtung zur Positionierung ein Bildaufnahmegerät (7), das so ausgebildet ist, dass es horizontal invertierte Bilder liefert, einen Bildschirm (5) zur Anzeige der invertierten Bilder, der am Bildaufnahmegerät angeschlossen ist, und Mittel zum Überlagern der vom Bildschirm angezeigten Bilder mit mindestens einer Positionierungsmarkierung (6) des Anwenders umfasst, wobei die Positionierungsmarkierung und die angezeigten Bilder etwa in derselben Ebene liegen.

2. Vorrichtung nach Anspruch 1, **dadurch gekennzeichnet, dass** die Mittel zur Überlagerung so ausgebildet sind, dass sie zwei Positionierungsmarkierungen (6) zweier Körperelemente des Anwenders überlagern und dass die Vorrichtung ein Messorgan (10) zum Messen eines Abstandes zwischen dem Anwender und dem Bildaufnahmegerät (7), ein Mittel (9), um auf einem Bild des Anwenders bei diesem Abstand einen Abstand zwischen den beiden Körperelementen des Anwenders zu bestimmen und ein Mittel zum Adaptieren einer Abweichung der Positionierungsmarkierungen von den Bildern in Abhängigkeit des ermittelten Abstandes zwischen den Körperelementen des Anwenders umfasst.

3. Vorrichtung nach Anspruch 2, **dadurch gekennzeichnet, dass** die Adaptationsmittel ein Organ zum Steuern (9) einer Vergrößerung der auf dem Bildschirm angezeigten Bilder umfassen.

4. Vorrichtung nach Anspruch 1, **dadurch gekennzeichnet, dass** sie ein Mittel zur Erkennung einer Fehlausrichtung auf den Bildern zwischen den Positionierungsmarkierungen (6) und dem Anwender und ein Mittel zur Verstärkung (9) des Ausrichtungsfehlers auf dem Bildschirm (5) umfasst.

5. Vorrichtung nach Anspruch 1, **dadurch gekennzeichnet, dass** sie eine optische Deakkommodierungs-Vorrichtung (22) umfasst, die vor dem Bildschirm (5) angeordnet ist.

6. Vorrichtung zur Erfassung mindestens eines Bildes mindestens eines Auges eines Anwenders, die mindestens eine Erfassungskamera (1) zum Erfassen des Bildes umfasst, **dadurch gekennzeichnet, dass** die Erfassungsvorrichtung eine Vorrichtung zur Positionierung (4) nach einem der vorhergehenden Ansprüche enthält, wobei der Bildschirm (5) der Vorrichtung zur Positionierung so in der Erfassungsvorrichtung montiert ist, dass, wenn der Anwender den Bildschirm betrachtet, sich das besagte Auge des Anwenders in etwa in der Achse der Erfassungskamera befindet.

7. Vorrichtung nach Anspruch 6, **dadurch gekennzeichnet, dass** der Bildschirm (5) in unmittelbarer Nähe zur Erfassungskamera (1) montiert ist.

8. Vorrichtung nach Anspruch 6, **dadurch gekennzeichnet, dass** sie mindestens einen optischen Strahlteiler (20, 21) enthält, der zwischen dem Bildschirm (5) und der Erfassungskamera (1) angeordnet ist.

9. Vorrichtung nach Anspruch 8, **dadurch gekennzeichnet, dass** sie eine erste Strahlteiler-Scheibe (20) umfasst, die sich schräg vor der Erfassungskamera (1) erstreckt und eine der Erfassungskamera zugewandte nicht reflektierende Seite und eine reflektierende Seite besitzt, die einer reflektierenden Seite einer zweiten Strahlteiler-Scheibe (21) gegenüberliegt, die sich parallel zur ersten Strahlteiler-Scheibe erstreckt und eine dem Bildschirm (5) gegenüberliegende Seite aufweist, wobei das Bildaufnahmegerät (7) der reflektierenden Seite der zweiten Strahlteiler-Scheibe zugewandt ist.

10. Verfahren zur Positionierung eines Anwenders relativ zu einer Bilderfassungsvorrichtung, **dadurch gekennzeichnet, dass** es die Schritte umfasst, Bilder des Anwenders im Wesentlichen kontinuierlich zu filmen, die gefilmten Bilder horizontal zu invertieren und dem Anwender die invertierten Bilder zu präsentieren, wobei diesen mindestens eine Positionierungsmarkierung (6) überlagert wird und wobei die Positionierungsmarkierung und die Bilder in etwa in derselben Ebene dargestellt werden.
